Europäisches Patentamt

European Patent Office

Office européen des brevets

(19)

(11) Publication number: **0 411 214 A1**

# EUROPEAN PATENT APPLICATION

(12)

(21) Application number: 89306792.6

(22) Date of filing: 04.07.89

(51) Int. Cl.5: **B29C 41/20**, B29C 67/18, C08J 5/12

(43) Date of publication of application:
06.02.91 Bulletin 91/06

(84) Designated Contracting States:
**DE FR GB IT NL**

(71) Applicant: SUNREX INDUSTRY CO., LTD
1, Asake-cho
Yokkaichi Mie(JP)

Applicant: MITSUI PETROCHEMICAL
INDUSTRIES, LTD.
2-5, Kasumigaseki 3-chome Chiyoda-ku
Tokyo 100(JP)

(72) Inventor: Matsuo, Masaharu c/o Mitsui
Petrochemical Ind.Ltd.
1-2 Waki 6-chome Waki-cho
Kuga-gun Yamaguchi(JP)
Inventor: Tachi, Kazumi
386-2, Shimoebi-cho
Yokkaichi Mie(JP)

(74) Representative: Myerscough, Philip Boyd et al
J.A.Kemp & Co. 14, South Square Gray's
Innlnn
London, WC1R 5EU(GB)

(54) Fluororesin rotation molded articles and process for preparing same.

(57) Rotation molded articles (1) comprises an insertion portion (2) composed of a tetrafluoroethylene resin and integral therewith a rotation molded portion (3) composed of a thermoplastic fluororesin. The articles may be prepared, for example, by first inserting the insertion portion into a mold and holding it in a predetermined position, charging said mold with the thermoplastic fluororesin and rotation molding said thermoplastic fluoriresin into the rotation molded portion.

# FLUORORESIN ROTATION MOLDED ARTICLES AND PROCESS FOR PREPARING SAME

## FIELD OF THE INVENTION

This invention relates to fluororesin rotation molded articles and process for preparing the same.

## BACKGROUND OF THE INVENTION

Molded articles formed from thermoplastic fluororesins have heretofore been widely used for various purposes, because they are excellent in physical properties such as heat resistance, chemical resistance and electrical insulation properties, and also in non-blocking properties and low friction properties in comparison with molded articles of general-purpose synthetic resins.

These molded articles of thermoplastic fluororesins are sometimes required to have boss portions or threaded portions provided onto certain predetermined positions of said molded articles. In such cases, these boss or threaded portions must be molded so that they have a wall thickness larger than that of other portions of the molded articles to assure mechanical strength of the boss or threaded portions.

However, when such molded articles having boss or threaded portions are intended to obtain by rotational molding technique, the wall thickness of the resulting molded article usually becomes uniform because of a centrifugal force generated by rotation at the time of molding, and hence it is difficult to obtain molded articles in which only specific portions thereof have a larger wall thickness.

In order to obtain molded articles having boss or threaded portions excellent in mechanical strength, therefore, the boss or threaded portions must be formed in the molded articles by insert molding technique.

That is, in the prior art processes, it was intended to obtain rotation molded articles having boss or threaded portions excellent in mechanical strength and having a larger wall thickness by previously molding the same resin as used in forming a main body of the rotation molded article into boss or threaded portions, inserting insertion portions such as the previously molded boss or threaded portions into a mold to retain them at predetermined positions within the mold, pouring the resin for constituting the main body of rotation molded article into the mold, and then molding said resin into the main body by rotational molding technique.

However, when rotation molded articles are intended to prepare by using in the insertion portions forming boss or threaded portions the same kind of resin as used for constituting a main body of said rotation molded article, there were such problems that the insertion portions larger in wall thickness come to foam or deform when heated at the time of rotational molding, after the completion of the rotational molding operation, the insertion portions become poor in releasability or rust of the metal of the mold comes to attach to the insertion portions.

In this connection, Japanese Patent L-O-P Pubin. No. 167219/1984 discloses a rotational molding process involving a step of rotationally molding terpolymers of (i) ethylene, (ii) trifluorochloroethylene or tetrafluoroethylene and (iii) pentafluoroisobutylene.

Furthermore, Japanese Patent L-O-P Pubin. No. 119012/1987 discloses a mold made of brass for use in rotationally molding fluororesins.

## OBJECT OF THE INVENTION

This invention aims at solving such problems as mentioned above, and an object of the present invention is to provide thermoplastic fluororesin rotation molded articles in which insertion portions are readily releasable from a mold, free from their being foamed or deformed at the time of molding thereof, free from rust of the mold attaching thereto, and the adhesion by fusion bonding between the insertion portions thereof and the rotation molded portion of the thermoplastic fluororesin is strong, and moreover, which are excellent in characteristics such as chemical resistance and the like, and processes for preparing said molded articles.

## SUMMARY OF THE INVENTION

For accomplishing such objects as mentioned above, the fluororesin rotation molded articles of the present invention are directed to such fluororesin rotation molded articles as obtained by rotation molding thermoplastic fluororesins so that a rotation molded portion thereof and an insertion portion or portions (hereinafter simply called the insertion portion) are molded into an integral structure within a mold, said thermoplastic fluororesin rotation molded articles being characterized in that said insertion portion is composed of tetrafluoroethylene resin (PTFE) and said rotation molded portion is composed of the thermoplastic fluororesin.

The processes for preparing the fluororesin rotation molded articles of the present invention by rotation molding a thermoplastic fluororesin in a mold, are characterized in that the insertion portion composed of tetrafluoroethylene resin (PTFE) is first inserted into the mold and held onto predetermined position or positions, said mold is then charged with the thermoplastic fluororesin and rotation molded into a rotation molded portion, and said insertion portion and said rotation molded portion are simultaneously molded into an integral structure.

Because of the above-mentioned characteristic features of the fluororesin rotation molded articles of the present invention and processes for preparing the same, the insertion portion is free from its being foamed or deformed at the time of operating rotational molding, readily releasable from the mold after the completion of the rotational molding operation, and free from rust of the mold attaching thereto when said insertion portion is released from said mold. Accordingly, no finishing step for the resulting fluororesin rotation molded articles is required, the adhesion strength by fusion bonding between the insertion portion and rotation molded portion of said molded articles is strong, and said insertion is excellent in mechanical strength because of its larger wall thickness.

BRIEF DESCRIPTION OF THE DRAWINGS

Figs. 1, 3 and 5 are sectional view showing certain embodiments of fluororesin rotation molded articles of the present invention.

Fig. 2 is a sectional view showing a mold used in the process for preparing fluororesin rotation molded articles of the present invention and one embodiment thereof obtained by using said mold.

Fig. 4 (A) is a sectional view showing the fluororesin rotation molded article of the present invention after cutting its head portion, and Fig. 4 (B) is a sectional view showing said head portion before cutting.

1 ... Fluororesin rotation molded article

2 ... Insertion portion

3 ... Rotation molded portion composed of hot melt fluororesin

5 ... Mold

DETAILED DESCRIPTION OF THE INVENTION

The fluororesin rotation molded articles of the present invention are illustrated below in detail with reference to examples as shown in the accompanying drawings.

Fluororesin rotation molded article

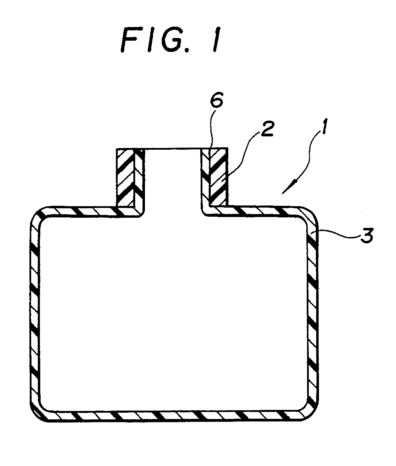

A fluororesin rotation molded article 1 of the present invention is composed, for example, as shown in Fig. 1, of an integral structure formed from an insertion portion 2 and a rotation molded portion 3, said insertion portion 2 being composed of a tetrafluoroethylene resin (PTFE) and said rotation molded portion 3 being composed of a thermoplastic fluororesin.

Fluroresins used for constituting the rotation molded portion 3 include copolymers of tetrafluoroethylene and perfluoroalkoxyethylene (PFA), copolymers of tetrafluoroethylene and hexafluoropropylene (FEP), trifluorochloroethylene polymers (PCTFE), copolymers of tetrafluoroethylene and ethylene (ETFE) and the like.

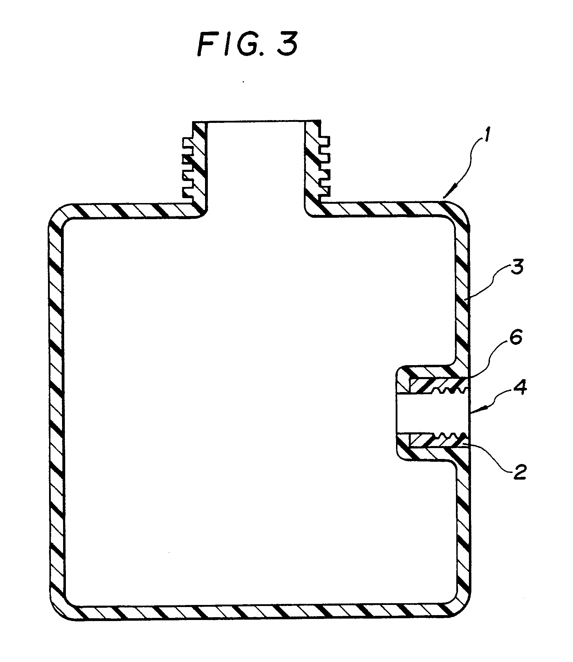

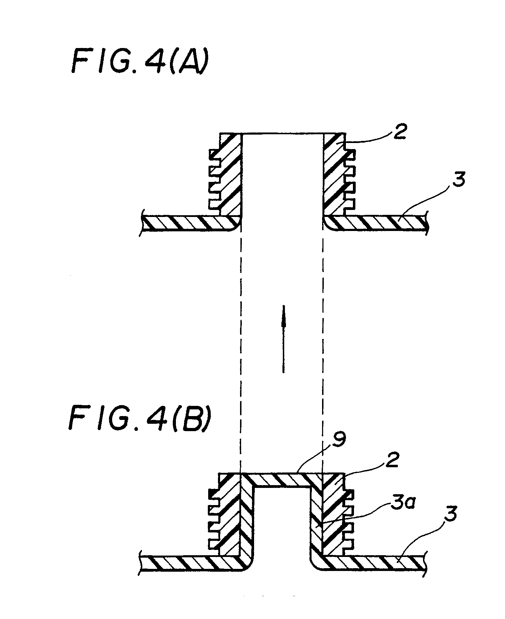

The insertion portion 2 may have any shape, for example, a simple cylindrical shape as shown in Fig. 1, a cylindrical shape having a threaded portion on the outer periphery as shown in Fig. 4, or a cylindrical shape having a threaded portion on the inner periphery as shown in Fig. 3.

The shape of this insertion portion is not limited to the above-mentioned cylindrical shape, but it may take any shape such as a square cylindrical shape, a columnar shape or the like.

In the fluororesin rotation molded articles as illustrated above, the insertion portion 2 may be provided so to project outward the rotation molded portion 3 composed of the thermoplastic fluororesin, or may be provided so as to form a concave portion 3 inward said rotation molded portion as shown in Fig. 3.

In this connection, the rotation molded portion 3 may have, if necessary, any shape such as a cylindrical shape or the like other than a bottle-like shape as shown in Fig. 1.

The insertion portion 2 composed of PTFE may be molded directly from PTFE powder by compression molding or transfer molding technique, or may be formed, under certain circumstances, from a PTFE block by cutting.

In the fluororesin rotation molded articles of the present invention, the insertion portion is excellent in mechanical strength, because the rotation molded portion 3 and insertion portion 2 are strongly fusion bonded together, and said insertion portion can be made thicker in comparison with the wall thickness of said rotation molded portion.

Further, the rotation molded articles of the present invention are wholly composed of fluororesins, and hence they are excellent in chemical resistance and are used for wide variety of uses, for example, instruments for washing semiconductors or physicochemical instruments.

## Process for preparing fluororesin rotation molded articles

The processes for preparing the fluororesin rotation molded articles of the present invention are illustrated below in detail with reference to examples shown in the accompanying drawings.

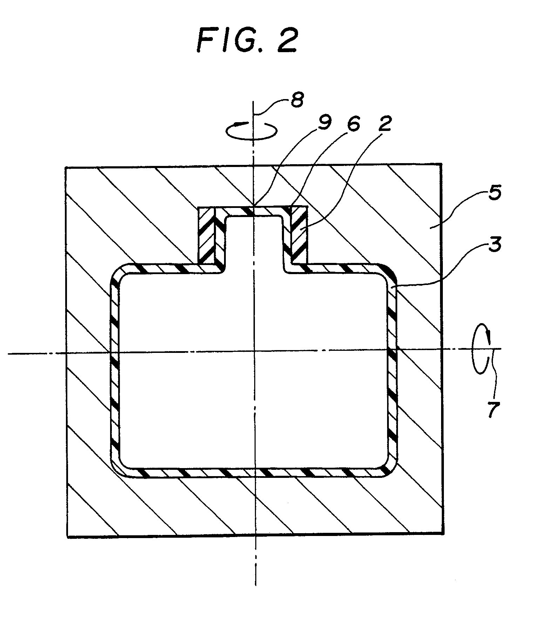

Fig. 2 is an explanatory view for the preparation of a fluororesin rotation molded article 1 of the present invention.

In order to prepare the fluororesin rotation molded article, the insertion portion 2 composed of a tetrafluoroethylene resin (PTFE) is first inserted into a mold 5 onto a predetermined position.

In that case, however, when the insertion portion composed of the same kind of thermoplastic fluororesin as used in the rotation molded portion as in the case of conventional insertion molding technique, there is observed undesirably such tendency that said insertion portion comes to foam or deform when heated at the time of carrying out the rotation molding operation under application of heat, and becomes poor in releasablity from the mold after the completion of the molding operation, or rust of the mold comes sometimes to attach to said insertion portion.

The number of such insertion portion as mentioned above may optionally be selected as desired.

Subsequently, after the insertion portion has been inserted into the mold onto a predetermined position, said mold is then charged with the abovementioned thermoplastic fluororesin. Usually, the mold is charged with particulate thermoplastic fluororesin.

The mold 5 having inserted thereinto the insertion portion 2 composed of PTFE onto the predetermined position and having been charged with the thermoplastic fluororesin is then rotated, whereby said thermoplastic fluororesin is melted and fusion bonded in a substantially uniform manner to the inner surface of said mold to form a rotation molded portion 3. When the rotation molded portion composed of the thermoplastic fluroresin is formed in this manner, said rotation molded portion 3 and the insertion portion 2 composed of PTFE are firmly fusion bonded together at a contacting interface 6 in the manner as shown in Fig. 2 to form an integral structure.

Because PTFE constituting the insertion portion 2 is higher in melt viscosity than the thermoplastic fluororesin used in the rotation molded portion, no substantial melt flow of said insertion portion 2 occurs even when such rotation molding operation is carried out under application of heat. Accordingly, the roation molded articles obtained by such rotation molding technique as above require practically no post-finishing step.

In the present invention, the heating temperature employed at the time of carrying out the rotation molding, though it may vary according to the kind of thermoplastic fluororesin used, is desirably selected, for example, preferably as 320-400°C and further preferably as 330-380°C when PFA is used as the thermoplastic fluororesin. In this heating temperature employed is less than 320°C, the fusion bonding between the thermoplastic fluororesin constituting the rotation molded portion 3 and the insertion portion 2 composed of PTFE tends to become insufficient, and if this heating temperature employed exceeds 400°C, undesirably the thermoplastic fluororesin used tends to decompose.

In practicing the preparation of the fluororesin rotation molded articles of the present invention, the mold is rotated under application of heat biaxially in both directions of rotating shafts 7 and 8, or rotated in one direction of the rotating shaft 7 or 8.

The rotating time employed under application of heat is usually at least 30 minutes but within 4 hours at which both PTFE and the thermoplastic fluororesin used for the preparation of the rotation molded article are melted.

After rotating under application of heat, the mold is cooled and released, whereby a fluororesin rotation molded article according to the present invention is obtained as an integral structure of the insertion portion 2 composed of PTFE and the rotation molded portion 3 composed of the thermoplastic fluororesin. The fluororesin rotation molded articles obtained by using the mold 5 in this manner may have in some cases a bag-like shape according to the method of rotation employed or other reasons, as shown in Fig. 1. In such cases, a head portion 9 of the fluororesin rotation molded article obtained is cut off, thereby obtaining a fluororesin rotation molded article having a bottle-like shape as shown in Fig. 1.

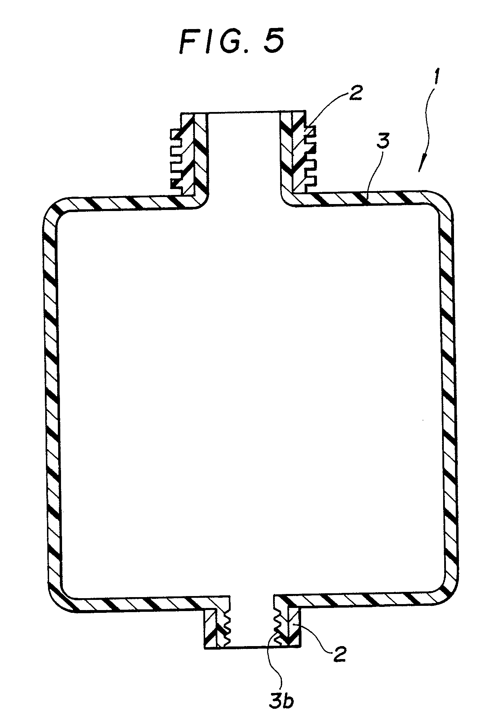

If necessary, a portion 3a of the rotation molded portion of the thermoplastic fluororesin rotation molded fusion bonded to the inner surface of the insertion portion shown in Fig. 4 (B) may be cut off in the manner as shown in Fig. 4 (A), or, if necessary, a threaded portion 3b may be provided as shown in Fig. 5 by thread cutting a portion of said rotation molded portion. Fig. 4 (B) shows a section of the insertion portion in the rotation molded article prior to providing an opening.

In the present invention, PTFE is used as a material for constituting the insertion portion in this manner, the insertion portion 2 is readily releasable from the mold 5, and no rust of the mold 5 will substantially attach to the insertion portion 5 when it is released from said mold 5.

Using a tensile tester, tensile strength of the fusion bonded portion of the rotation molded portion composed of the thermoplastic fluororesin and the insertion portion composed of PTFE in the fluororesin rotation molded article of the present invention was tested, whereupon said molded article torn at portions other than said fusion bonded portion, for example, a chuck portion of said tensile tester.

In the fluororesin rotation molded articles obtained by the processes of the present invention as illustrated above, the insertion portions thereof are excellent in mechanical strength because of their larger wall thickness, and insertion portions are firmly fusion bonded to the rotation molded portion composed of the thermoplastic fluororesin.

## EFFECT OF THE INVENTION

The fluororesin rotation molded articles of the present invention comprising an integral structure of the rotation molded portion obtained by rotation molding the thermoplastic fluororesin in the mold and the insertion portion are characterized in that said insertion portion is composed of a tetrafluoroethylene resin (PTFE) and said rotation molded portion is composed of the thermoplastic fluororesin.

In the fluororesin rotation molded article of the present invention having such a characteristic feature as mentioned above, the insertion portion is firmly fusion bonded to the rotation molded portion of said molded article. Further, the fluororesin rotation molded article of the present invention is excellent in properties such as chemical resistance, because it is wholly composed of fluororesin. Moreover, in the fluororesin rotation molded article of the present invention, the insertion portion will not foam or deform at the time when the rotational molding operation is carried out under application of heat. Accordingly, no post-finishing step is required after the completion of the rotational molding operation, the insertion portion is releasable from the mold after the rotational molding thereof, and no rust of the mold will attach to said insertion portion at the time when said mold is released.

The processes for preparing the fluororesin rotation molded articles by rotation molding the thermoplastic fluororesin in the mold, are characterized in that the insertion portion composed of a tetrafluoroethylene resin (PTFE) is first inserted into the mold and held onto predetermined position or positions, said mold is then charged with the thermoplastic fluororesin which is molded into the rotation molded portion, and said insertion portion and said rotation molded portion are simultaneously molded in said mold into an integral structure.

In the processes for preparing the fluororesin molded articles of the present invention having such a characteristic feature as mentioned above, the insertion portion will not foam or deform at the time of rotational molding operation, and accordingly no post-finishing step for the rotation molded articles is required. Further, the insertion portion after the completion of the rotational molding operation is readily releasable from the mold, and no rust of the mold will attach to said insertion portion. Furthermore, it is easy to render the insertion portion of the fluororesin rotation molded article larger in wall thickness so that said insertion portion becomes excellent in mechanical strength.

## Claims

1. An article of integral structure comprising a portion obtained by rotation molding a thermoplastic fluororesin in a mold and an insertion portion, characterised in that said insertion portion is composed of a tetrafluoroethylene resin and said rotation molded portion is composed of a thermoplastic fluororesin.

2. An article according to claim 1 wherein the thermoplastic fluororesin is a copolymer of tetrafluoroethylene and a perfluoroalkoxy ethylene, a copolymer of tetrafluoroethylene and pentafluoropropylene, a trifluorochloroethylene polymer or a copolymer of tetrafluoroethylene and ethylene.

3. A process for preparing an article as claimed in claim 1 or 2 which comprises first inserting said insertion portion into a mold and holding it in a predetermined position, charging said mold with said thermoplastic fluororesin and rotation molding said thermoplastic resin to form said rotation molded portion.

## FIG. 1

# FIG. 2

# FIG. 3

FIG. 4(A)

FIG. 4(B)

# FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 076 282  (J.N. SCOTT et al.) * Abstract; figures; column 1, line 63 - column 2, line 62; column 4, lines 2-26,43-52; claim 1 * | 1-3 | B 29 C   41/20 B 29 C   67/18 C 08 J    5/12 |
| Y | DERWENT JAPANESE PATENTS GAZETTE, week 8724, 29th July 1987, section Chemical, page 23, Derwent Publications; & JP-A-62 101 987 (NISSHIN) 29-10-1985 * Figures * | 1-3 | |
| A | DE-A-2 521 734  (RESISTOFLEX CORP.) * Claims; figures * | 2-3 | |
| D,A | EP-A-0 121 073  (ALLIED CORP.) * Abstract; claims * | 1-2 | |

|  |  |  | TECHNICAL FIELDS SEARCHED (Int. Cl.5) |
|---|---|---|---|
|  |  |  | B 29 C C 08 J |

The present search report has been drawn up for all claims

| Place of search | Date of completion of the search | Examiner |
|---|---|---|
| THE HAGUE | 22-01-1990 | MOLTO PINOL F.J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)